(19) Europäisches Patentamt
European Patent Office
Office européen des brevets

(11) Veröffentlichungsnummer: **0 002 754**
**B1**

(12) **EUROPÄISCHE PATENTSCHRIFT**

(45) Veröffentlichungstag der Patentschrift: **18.05.83**

(21) Anmeldenummer: **78101722.3**

(22) Anmeldetag: **16.12.78**

(51) Int. Cl.³: **C 07 D 401/14,**
C 07 D 401/12, C 08 K 5/34

(54) **Neue Polyalkylpiperidinderivate von s-Triazinen, ihre Verwendung zum Stabilisieren von Kunststoffen und die so stabilisierten Kunststoffe.**

(30) Priorität: **30.12.77 CH 16297/77**
**31.08.78 CH 9199/78**

(43) Veröffentlichungstag der Anmeldung:
**11.07.79 Patentblatt 79/14**

(45) Bekanntmachung des Hinweises auf die Patenterteilung:
**18.05.83 Patentblatt 83/20**

(84) Benannte Vertragsstaaten:
**BE CH DE FR GB IT**

(56) Entgegenhaltungen:
**DE - A - 2 319 816**
**DE - A - 2 636 130**
**DE - A - 2 636 144**
**DE - A - 2 642 446**
**DE - A - 2 730 449**
**DE - A - 2 801 470**

(73) Patentinhaber: **CIBA-GEIGY AG**
**Patentabteilung Postfach**
**CH-4002 Basel (CH)**

(72) Erfinder: **Rody, Jean, Dr.**
**Rütiring 82**
**CH-4125 Riehen (CH)**
Erfinder: **Berner, Godwin, Dr.**
**Oetlingerstrasse 2**
**CH-4057 Basel (CH)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 002 754 B1

Neue Polyalkylpiperidinderivate von s-Triazinen, ihre Verwendung zum Stabilisieren von Kunststoffen und die so stabilisierten Kunststoffe

Die Erfindung betrifft neue Polyalkylpiperidin-derivate von s-Triazinen und ihre Verwendung als Stablisatoren für Kunststoffe.

Aus der DE - A - 23 19 816 sind s-Triazinderivate bekannt, deren Substituenten mindestens einen Polyalkylpiperidinrest enthalten. Diese Verbindungen sind wirkungsvolle Stabilisatoren für Kunststoffe, vor allem gegen Lichtabbau. Für bestimmte Verwendungszwecke sind jedoch die Flüchtigkeit und Migrationstendenz dieser Triazinderivate zu hoch. Dies ist vor allem dann der Fall, wenn der kunststoff in dünnen Schichten verwendet wird, wie z.B. in Fasern, Folien oder Lacken, und eine Stabilisierung über einen längeren Zeitraum erforderlich ist.

Es wurde daher versucht, das Molekulargewicht solcher Triazin-Piperidin-Derivate zu erhöhen und dadurch ihre Flüchtigkeit und Wanderungstendenz herabzusetzen. In der DE - A - 26 36 130 wird beispielsweise vorgeschlagen mehrere piperidinsubstituierte Triazinreste über eine polyvalente Verbindung, z.B. ein Polyamin, zu verknüpfen. In der DE - A - 26 36 144 werden piperidinsubstituierte Polykondensate von difunktionellen Triazinderivaten, als Stabilisatoren vorgeschlagen. Auch solche Polytriazine bilden mit dem stabilisierten Kunststoff ein physikalisches Gemisch, aus welchem sie beispielsweise durch Extraktion wieder entfernt werden können. Dies spielt praktisch z.B. bei Bewitterung von im Aussenbereich verwendeten Kunststoffen eine Rolle oder bei lösungsmittelbeständigen Beschichtungen und Lacken.

Ziel der Erfindung war es, Stabilisatoren auf Basis von Piperidin-Triazinen zu finden, die mit dem zu schützenden Polymer eine chemische Verbindung eingehen und somit weder durch Migration noch durch Elution aus dem Kunststoff entfernt werden können.

Dieses Ziel konnte dadurch erreicht werden, dass neue s-Triazinderivate hergestellt wurden, die als Substituenten in 2-, 4- und 6-Stellung mindestens einen Polyalkylpiperidinrest und mindestens eine N-Methylolaminogruppe oder deren Aether enthalten. Diese Verbindungen können Mono- oder Polytriazine sein.

Gegenstand der Erfindung sind s-Triazinverbindungen der Formel I

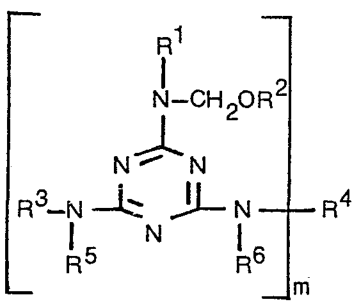

(I)

die in den Substituenten in 2-, 4- oder 6-Stellung mindestens einen 2,2,6,6-Tetramethyl-4-piperidylrest enthalten, wobei m 1 oder 2 ist,

$R^5$ und $R^6$ Wasserstoff, $C_3$—$C_8$ Alkyl, $C_1$—$C_2$ Hydroxyalkyl, $C_2$—$C_4$ Alkoxylalkyl, Cyclohexyl, Benzyl oder eine Polyalkylpiperidingruppe der Formel II

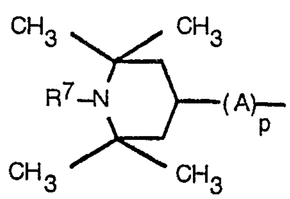

(II)

bedeuten, worin p null oder 1 ist, A $C_1$—$C_4$ Alkylen, —$NR^6$—$C_2$—$C_{12}$ Alkylen- oder —$OCH_2CH_2CH_2$— bedeutet und $R^7$ H, O·, $C_1$—$C_{12}$ Alkyl, Allyl, Benzyl oder eine Gruppe —$CH_2$—$CH(R^8)$—OH bedeutet, worin $R^8$ H, $CH_3$ oder Phenyl ist, $R^1$ und $R^3$ Wasserstoff, $C_1$—$C_4$ Alkyl, $C_1$—$C_2$ Hydroxyalkyl, $C_2$—$C_3$ Alkoxyalkyl oder einen Piperidinrest der Formel II bedeuten, in welchem p null ist und $R^7$ Wasserstoff, $C_1$—$C_4$ Alkyl oder Hydroxyäthyl ist,

$R^2$ Wasserstoff, $C_1$—$C_4$ Alkyl oder Allyl darstellt, $R^4$ wenn m 1 ist, Wasserstoff, $C_1$—$C_4$ Alkyl, Hydroxyäthyl, Benzyl oder ein Piperidinrest der Formel II ist und wenn m 2 ist, $C_2$—$C_6$ Alkylen, —Phenylen-$CH_2$—Phenylen— oder einen Rest —$CH_2CH_2$—NY—$[CH_2CH_2$—NY$]_q$$CH_2CH_2$— darstellt, worin q null oder 1 ist und Y eine Triazinylgruppe der Formel III

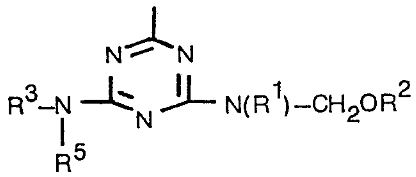

(III)

bedeutet.

Diese Verbindungen sind in der Lage mit ihren

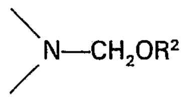

-Gruppen eine chemische Reaktion mit den polymeren Substraten einzugehen, sofern diese eine reaktive Gruppe besitzen. Reaktive Gruppen sind Gruppen mit beweglichen Wasserstoffatomen, also vor allem OH und NH-Gruppen. Sofern $R^2$ Wasserstoff oder sofern $R^1$, $R^3$, $R^4$, $R^5$ oder $R^6$ Hydroxyalkyl ist, können die Verbindungen der Formel I auch mit Gruppen reagieren, die zur Reaktion mit OH befähigt sind wie z.B. Epoxidgruppen oder Isocyanat-Gruppen. Die Verbindungen der Formel I eignen sich daher vor allem zur Stabilisierung von Polymeren oder Prepolymeren, die reaktive Gruppen haben wie z.B. Melamin-, Harnstoff-, Alkydharze, Polyurethane, vernetzbare Acrylharze, oder Epoxidharze. Die Verbindungen der Formel I eignen sich aber auch zur Stabilisierung von Polymeren, die keine reaktive Gruppen haben. In diesem Fall liegen sie als physikalisches Gemisch vor und können bei erhöhter Temperatur mit sich selbst kondensieren, was zu einer weiteren Molekülvergrösserung führt.

Bedeuten etwaige Substituenten $C_1$—$C_4$-Alkyl, so kann es sich um unverzweigtes oder verzweigtes Alkyl handeln, wie Methyl, Aethyl, Propyl, Isopropyl, n-Butyl, sec.-Butyl, tert.-Butyl. $R_7$ kann als $C_1$—$C_{12}$ Alkyl ausserdem noch z.B. Hexyl, Octyl, 2-Aethylhexyl, Decyl oder Dodecyl sein. $R_5$ und $R_6$ bedeuten als $C_3$—$C_8$ Alkyl z.B. Propyl, Isopropyl, Butyl, sec.-Butyl, tert.-Butyl, Hexyl oder Octyl.

$R_1$, $R_3$, $R_5$ und $R_6$ bedeuten als $C_1$—$C_2$ Hydroxyalkyl Hydroxymethyl oder Hydroxyäthyl.

Als Alkoxyalkyl bedeuten $R_1$, $R_3$, $R_5$ und $R_6$ z.B. Methoxymethyl oder Methoxyäthyl.

Als $C_2$—$C_6$ Alkylen bedeutet $R_4$ beispielsweise 1,2-Aethylen, 1,1-Aethylen, 1,2-Propylen, 1,4-Butylen oder 1,6-Hexylen.

In den Verbindungen der Formel I stellt m eine ganze Zahl von 1 bis 4 dar, wobei $R^4$ ein m-wertiger Rest ist. Es handelt sich also um einheitliche Verbindungen.

Beispiele für Verbindungen der Formel I mit $m = 1$ sind die Verbindungen der folgenden Tabelle:

| $R^1$ | $R^2$ | $R^3$ | $R^4$ | $R^5$ | $R^6$ |
|---|---|---|---|---|---|
| H | H | $-C_4H_9$ | $-C_4H_9$ | 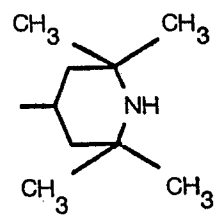 | 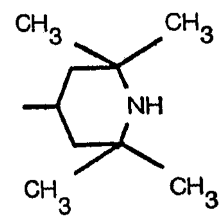 |
| $-CH_2OCH_3$ | $-CH_3$ | $-C_2H_5$ | $-C_2H_5$ | 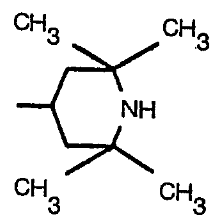 | 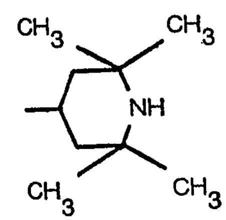 |
| H | $-CH_2CH=CH_2$ | 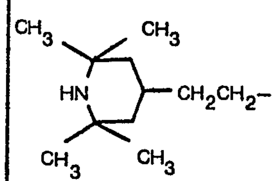 | 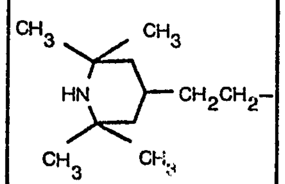 | H | H |

Beispiele für Verbindungen der Formel I mit m = 2 sind die Verbindungen mit folgenden Substituenten:

| $R^1$ | $R^2$ | $R^3$ | $R^4$ | $R^5$ | $R^6$ |
|---|---|---|---|---|---|
| H | $CH_3$ | $C_2H_5$ | $-(CH_2)_6-$ | $-C_2H_5$ | 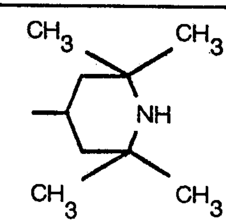 |
| H | $C_2H_5$ | 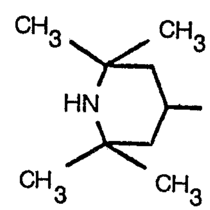 | $-(CH_2)_6-$ | 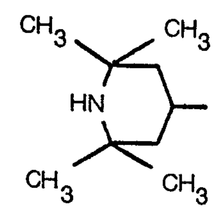 | H |

Die Herstellung der Verbindungen der Formel I kann nach bekannten Methoden erfolgen. Die Verbindungen der Formel I können z.B. aus Cyanursäurechlorid durch stufenweisen Ersatz der Chloratome durch die Reste $R_3N(R_5)$—, $R_4N(R_6)$— und —$NH_2$ oder —$NHR^1$ und anschliessende Einführung der —$CH_2OR^2$—Gruppe hergestellt werden. Die Einführung der —$CH_2OR^2$—Gruppe geschieht durch Reaktion der entsprechenden Aminotriazinverbindung mit Formaldehyd nach der allgemeinen Methode von Gams, Widmer und Fisch (Helv. Chim. Acta *24* (1941) 1). Geschieht die Umsetzung mit Formaldehyd im wässrigen Medium, so entstehen dabei die N-Methylolverbindungen ($R^2 = H$) während man beim Arbeiten in Alkoholen in Gegenwart von Säuren die entsprechenden N-Alkoxymethylverbindungen ($R^2 =$ Alkyl) erhält. Letztere Verbindungen können aber auch durch Verätherung der Methylolverbindungen erhalten werden. Nähere Details können aus den Beispielen entnommen werden.

Die Produkte der Formel I besitzen gute hydrolytische Beständigkeit. Sie sind in den meisten organischen Polymeren gut löslich und bewirken bereits in geringen Konzentrationen eine Stabilisierung der Polymeren gegen Alterung, insbesondere gegen photochemischen Abbau. Beispiele für Polymere, die durch Lichteinwirkung normalerweise geschädigt werden und durch den Zusatz von Verbindungen der Formeln I oder II stabilisiert werden können, sind:

1. Polymere von Mono- und Diolefinen, beispielsweise Polyäthylen (das gegebenenfalls vernetzt sein kann, Polypropylen, Polyisobutylen, Polymethylbuten-1, Polymethylpenten-1, Polyisopren oder Polybutadien.
2. Mischungen der under 1) genannten Polymeren, z.B. Mischungen von Polypropylen mit Polyäthylen oder mit Polyisobutylen.
3. Copolymere von Mono- und Diolefinen, wie z.B. Aethylen-Propylen-Copolymere, Propylen-Buten-1-Copolymere, Propylen-Isobutylen-Copolymere, Aethylen-Buten-1-Copolymere sowie Terpolymere von Aethylen mit Propylen und einem Dien, wie Hexadien, Dicyclopentadien oder Aethylidennorbornen.
4. Polystyrol.
5. Copolymere von Styrol oder $\alpha$-Methylstyrol mit Dienen oder Acrylderivaten, wie z.B. Styrol-Butadien, Styrol-Acrylnitril, Styrol-Acrylnitril-Methylacrylat; Mischungen von hoher Schlagzähigkeit aus Styrol-Copolymeren und einem anderen Polymer wie z.B. einem Polyacrylat, einem Dien-Polymeren oder einem Aethylen-Propylen-Dien-Terpolymeren; sowie Block-Copolymere des Styrols, wie z.B. Styrol-Butadien-Styrol, Styrol-Isopren-Styrol oder Styrol-Aethylen/Butylen-Styrol.
6. Graft- oder Pfropfcopolymere von Styrol, wie z.B. Styrol auf Polybutadien, Styrol und Acrylnitril auf Polybutadien sowie deren Mischungen mit den unter 5) genannten Copolymeren, wie sie als sogenannte ABS-Polymere bekannt sind.
7. Halogenhaltige Polymere, wie z.B. Polyvinylchlorid, Polyvinylidenchlorid, Polyvinylfluorid, Polychloropren, Chlorkautschuke und Copolymere wie Vinylchlorid-Vinylidenchlorid, Vinylchlorid-Vinylacetate oder Vinylidenchlorid-Vinylacetat.
8. Polymere, die sich von $\alpha$, $\beta$-ungesättigten Säuren und deren Derivaten ableiten, wie Polyacrylate und Polymethacrylate, Polyacrylamide und Polyacrylnitril.
9. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyral, Polyallylphthalat, Polyallylmelamin und deren Copolymere mit anderen Vinylverbindungen, wie Aethylen/Vinylacetat-Copolymere.
10. Homo- und Copolymere von Epoxyden, wie Polyäthylenoxyd, Polypropylenoxyd oder deren Copolymere mit Bisglycidyläthern.
11. Polyacetale, wie Polyoxymethylen, sowie solche Polyoxymethylene, die als Comonomeres Aethylenoxyd enthalten.
12. Polyphenylenoxyde.
13. Polyurethane und Polyharnstoffe.
14. Polycarbonate.
15. Polysulfone.
16. Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.
17. Polyester, die sich von Dicarbonsäuren und Dialkoholen und/oder von Hydroxycarbonsäuren oder den entsprechenden lactonen ableiten, wie Polyäthylenterephthalat, Polybutylenterephthalat, Poly-1,4-dimethylolcyclohexanterephthalat, sowie Block-Polyäther-ester, die sich von Polyäthern mit Hydroxylendgruppen und Dicarbonsäuren ableiten.
18. Vernetzte Polymerisate, die sich von Aldehyden einerseits und Phenolen, Harnstoffen und Melaminen andererseits ableiten, wie Phenol-Formaldehyd-, Harnstoff- Formaldehyd- und Melamin-Formaldehydharze.
19. Alkydharze, wie Glycerin-Phthalsäure-Harze und deren Gemische mit Melamin-Formaldehydharzen.
20. Ungesättigte Polyesterharze, die sich von Copolyestern gesättigter- und ungesättigter Dicarbonsäuren mit mehrwertigen Alkoholen, sowie Vinylverbindungen als Vernetzungsmitteln ableiten, wie auch deren halogenhaltige, schwerbrennbare Modifikationen.

21. Vernetzte Epoxidharze, die sich von Polyepoxiden ableiten, z.B. von Bis-glycidyläthern oder von cycloaliphatischen Diepoxiden.

22. Natürliche Polymere, wie Cellulose, Gummi, sowie deren polymerhomolog chemisch abgewandelte Derivate, wie Celluloseacetate, -propionate und -butyrate, bzw. die Celluloseäther, wie Methylcellulose.

Von diesen Polymeren sind die Gruppen 13, 18, 19, 20, 21, 22 von besonderer Bedeutung, weil sie Polymere enthalten, die mit den $—CH_2OR^2—$Gruppen der Stabilisatoren der Formel I reagieren können und für Lacke und Beschichtungsmaterialien verwendbar sind. Auch Acrylharze, die durch chemische Modifikation vernetzbar gemacht werden, sind für diese Zwecke geeignet.

Die Reaktion der Stabilisatoren mit den Polymeren kann durch saure Härtungskatalysatoren beschleunigt werden, wie sie z.B. für die Härtung von Melaminharzen bekannt sind. Beispiele hierfür sind organische Carbonsäuren, Sulfonsäuren oder Ammoniumsalze.

Die erfindungsgemässen Stabilisatoren werden den Polymeren in einer Menge 0,01 bis 5 Gew.-%, berechnet auf das Polymere, zugesetzt. Vorzugsweise verwendet man 0,02 bis 1 Gew.-%. Der Zusatz des Stabilisators erfolgt vor der Formgebung des Kunststoffes, er kann durch trockenes Mischen der pulverförmigen Materialien geschehen oder durch Mischen mit einer Lösung oder der Schmelze des Polymeren. Der Stabilisator kann auch zu Präpolymeren oder deren Lösung zugemischt werden. Solche Präpolymere werden vor allem als Lackharze, als Beschichtungsmassen oder als Pressmassen verwendet, die erst während oder nach der Formgebung in den vernetzten, hochmolekularen Zustand übergehen.

Gleichzeitig mit dem Zumischen des erfindungsgemässen Stabilisators können auch andere Zusätze zugemischt werden, wie sie bei der Verarbeitung von Kunststoffen üblich sind. Dies betrifft z.B. Pigmente, Füllstoffe, Weichmacher, Detergentien, Glasfasern, optische Aufheller, andere Stabilisatoren, Härtungskatalysatoren, Flammschutzmittel oder Antistatica.

Bei der Mitverwendung anderer, bekannter Stabilisator können synergistische Effekte auftreten, eine solche Co-Stabilisator-Wirkung kann z.B. mit Lichtschutzmitteln auf Benztriazol-Basis oder auf Basis von Nickelverbindungen auftreten.

Die so stabilisierten Kunststoffe können in verschiedenster Form angewendet werden, z.B. als Folien, Fasern, Bändchen, Pressmassen, Beschichtungsmassen oder Anstrichmassen. Von besonderer Bedeutung ist ihre Verwendung als Bindemittel für Lacke.

<u>Beispiele</u>

### Beispiele 1

31,0 g 2,4-Bis-[N-(2,2,6,6-tetramethyl-4-piperidyl)-butyl (amino)]-6-amino 1,3,5-triazin (das Ausgangsmaterial kann nach DE - A - 2 319 816 hergestellt werden) werden in 100 ml Eisessig gelöst. Nach der Zugabe von 15 ml 37%iger Formaldehydlösung wird das Reaktionsgemisch 20 Stunden bei Raumtemperatur gerührt, mit 200 ml Wasser verdünnt und mit konzentrierter Natronlauge stark alkalisch gestellt. Das ausgefallene Produkt wird abfiltriert, mit Wasser gewaschen und im Exsikkator über Calciumchlorid getrocknet. Das erhaltene 2,4-Bis-[N-(2,2,6,6-tetramethyl-4-piperidyl)-butylamino]-6-dimethylolamino-1,3,5-triazin schmilzt bei 79—80°C.

### Beispiel 2

54,3 g 2,4,6-Tris-(2,2,6,6-tetramethyl-4-piperidylamino)-1,3,5-triazin werden in 200 ml Eisessig gelöst. Nach der Zugabe von 20 ml 36%iger Formaldehydlösung wird das Reaktionsgemisch 18 Stunden bei Raumtemperatur gerührt. Man verdünnt mit 300 ml Wasser, stellt mit konzentrierter Natronlauge stark alkalisch und extrahiert mit Toluol. Die Toluollösung wird über Natriumsulfat getrocknet und im Vakuum eingedampft. Beider Kristallisation des Rückstandes aus Petrolaether erhält man das 2,4-Bis(2,2,6,6-tetramethyl-4-piperidylamino)-6-(2,2,6,6-tetramethyl-4-piperidyl-methylolamino)-1,3,5-triazin als farblose Kristalle von Schmelzpunkt 201—202°C.

### Beispiel 3

18,9 g 2,4-Bis-aethylamino-6-[N-(2,2,6,6-tetramethyl-4-piperidyl)-N-butylamino]-1,3,5-triazin werden mit 20 ml 36%iger Formaldehydlösung in 100 ml Eisessig 24 Stunden bei Raumtemperatur gerührt. Das Reaktionsgemisch wird mit 200 ml Wasser verdünnt und mit konzentrierter Natronlauge stark alkalisch gestellt. Das ausgefallene, harzige Produkt wird mit Wasser gewaschen und im Exsikkator über Calciumchlorid getrocknet. Man erhält das 2,4-Bis-N-methylol-aethylamino-6-[N-(2,2,6,6-tetramethyl-4-piperidyl)-butylamino]-1,3,5-triazin als farblose, leicht klebrige Substanz.

### Beispiel 4

25 g 2,4-Bis-N-methylol-aethylamino-6-[N-(2,2,6,6-tetramethyl-4-piperidyl)-butylamino]-1,3,5-triazin (Produkt von Beispiel 3) werden in 150 ml Methanol und 10 ml konzentrierter Salzsäure 20 Stunden bei Raumtemperatur gerührt. Die Reaktionslösung wird mit Natriumbicarbonat neutralisiert, das Salz abfiltriert und die Methanollösung im Vakuum eingedampft. Der Rückstand wird aus Toluol/Ligroin umkristallisiert. Man erhält das 2,4-Bis-N-methoxymethyl-aethylamino-6-[N-(2,2,6,6-tetramethyl-4-piperidyl)-butylamino]-1,3,5-triazin als farblose Kristalle, die sich über 200°C langsam zersetzen.

**Patentansprüche**

1. s-Triazinverbindungen der Formel I,

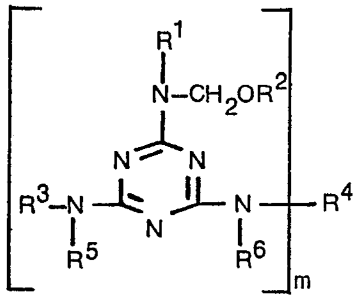

(I)

die in den Substituenten in 2-, 4- oder 6-Stellung mindestens einen 2,2,6,6-Tetramethyl-4-piperidylrest enthalten, wobei m 1 oder 2 ist,
$R^5$ und $R^6$ Wasserstoff, $C_3$—$C_8$ Alkyl, $C_1$—$C_2$ Hydroxyalkyl, $C_2$—$C_4$ Alkoxyalkyl, Cyclohexyl, Benzyl oder eine Polyalkylpiperidingruppe der Formel II

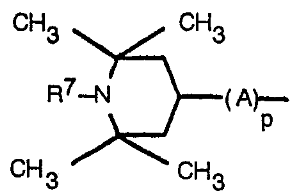

(II)

bedeuten, worin p null oder 1 ist, A $C_1$—$C_4$ Alkylen, —$NR^6$—$C_2$—$C_{12}$ Alkylen- oder —$OCH_2CH_2CH_2$— bedeutet und $R^7$ H, O·, $C_1$—$C_{12}$ Alkyl, Allyl, Benzyl oder eine Gruppe —$CH_2$—$CH(R^8)$—OH bedeutet, worin $R^8$ H, $CH_3$ oder Phenyl ist, $R^1$ und $R^3$ Wasserstoff, $C_1$—$C_4$ Alkyl, $C_1$—$C_2$ Hydroxyalkyl, $C_2$—$C_3$ Alkoxyalkyl oder einen Piperidinrest der Formel II bedeuten, im welchem p null ist und $R^7$ Wasserstoff, $C_1$—$C_4$ Alkyl oder Hydroxyäthyl ist,
$R^2$ Wasserstoff, $C_1$—$C_4$ Alkyl oder Allyl darstellt, $R^4$ wenn m 1 ist, Wasserstoff, $C_1$—$C_4$ Alkyl, Hydroxyäthyl, Benzyl oder ein Piperidinrest der Formel II ist und wenn m 2 ist, $C_2$—$C_6$ Alkylen, —Phenylen—$CH_2$—Phenylen— oder einen Rest —$CH_2CH_2$—NY—[$CH_2CH_2$—NY]$_q$—$CH_2CH_2$— darstellt, worin q null oder 1 ist und Y eine Triazinylgruppe der Formel III

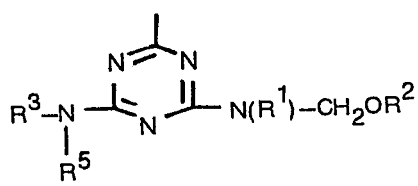

(III)

bedeutet.

2. Verfahren zum Stabilisieren von Lackharzen auf Basis von Polyurethanen, Melaminharzen oder mit Melamin-Formaldehyd-Kondensaten bzw. Poly-isocyanaten härtbaren Polyester-, Alkyd- oder Acrylharzen, durch Zusatz eines Polyalkylpiperidinderivates eines s-Triazins, dadurch gekennzeichnet, dass man eine Verbindung des Anspruches 1 verwendet.

3. Gegen Lichtschädigung stabilisiertes Lackharz auf Basis von Polyurethanen, Melaminharzen oder mit Melamin-Formaldehyd-Kondensaten oder Polyisocyanaten härtbaren Polyester-, Alkyd- oder Acrylharzen, dadurch gekennzeichnet, dass es 0,01 bis 5 Gew.-% mindestens einer Verbindung des Anspruches 1 als Stabilisator enthält.

**Claims**

1. An s-triazine compound of the formula I

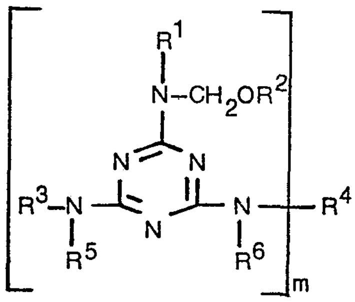

(I)

wherein m is 1 or 2, $R^5$ and $R^6$ are hydrogen, $C_3$—$C_8$alkyl, $C_1$—$C_2$hydroxyalkyl, $C_2$—$C_4$alkoxyalkyl, cyclohexyl, benzyl or a polyalkylpiperidine group of the formula

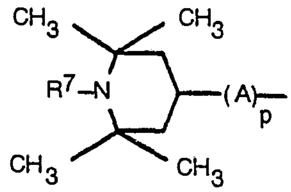

(II)

wherein p is 0 or 1, A is $C_1$—$C_4$alkylene, —$NR^6$-$C_2$—$C_{12}$alkylene or —$OCH_2CH_2CH_2$—, and $R^7$ is H, O·, $C_1$—$C_{12}$alkyl, allyl, benzyl or a —$CH_2$—$CH(R^8)$—OH group, wherein $R^8$ is H, $CH_3$ or phenyl $R^1$ and $R^3$ are hydrogen, $C_1$—$C_4$alkyl, $C_1$—$C_2$hydroxyalkyl, $C_2$—$C_3$—alkoxyalkyl or a piperidine radical of the formula II, in which p is 0 and $R^7$ is hydrogen, $C_1$—$C_4$alkyl or hydroxyethyl, $R^2$ is hydrogen, $C_1$—$C_4$alkyl or allyl, $R^4$, if n is 1, is hydrogen, $C_1$—$C_4$alkyl, hydroxyethyl, benzyl or a piperidine radical of the formula II, and, if m is 2, $R_4$ is $C_2$—$C_6$alkylene, —phenylene—$CH_2$—phenylene— or a —$CH_2CH_2$—NY—$[CH_2CH_2$—$NY]_q$—$CH_2CH_2$— radical, wherein q is 0 or 1 and Y is a triazinyl group of the formula III

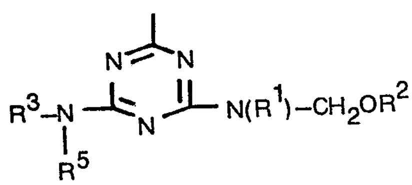

(III)

which compound contains in the substituents in the 2-, 4- or 6-position at least one 2,2,6,6-tetramethyl-4-piperidyl radical.

2. A method of stabilising surface-coating resins based on polyurethanes, melamine resins or polyester, alkyd, or acrylic resins which can be cured with melamine/formaldehyde condensates or polyisocyanates, by addition of a polyalkylpiperidine derivative of an s-triazine, which method comprises the use of a compound according to claim 1.

3. A surface-coating resin stabilised against damage by light and based on polyurethanes, melamine resins or polyester, alkyd or acrylic resins which can be cured with melamine/formaldehyde condensates or polyisocyanates, which resin contains as stabiliser 0.01 to 5% by weight of at least one compound as claimed in claim 1.

**Revendications**

1. Composés s-triaziniques répondant à la formule

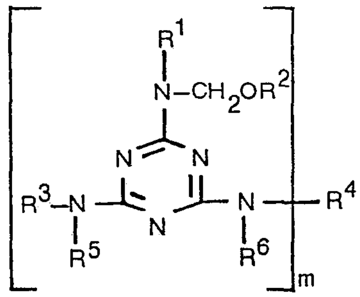

(I)

et contenant, dans les substituants en position 2, 4 ou 6, au moins un radical tétraméthyl-2,2,6,6-pipéridyle-4, les divers symboles contenus dans cette formule ayant les significations suivantes:
m est égal à 1 ou à 2,
$R^5$ et $R^6$ représentent chacun l'hydrogène, un alkyle en $C_3$—$C_8$, un hydroxyalkyle en $C_1$ ou $C_2$, un alcoxy-alkyle en $C_2$—$C_4$, un cyclohexyle, un benzyle ou un radical polyalkyl-pipéridinique répon- dans à la formule II

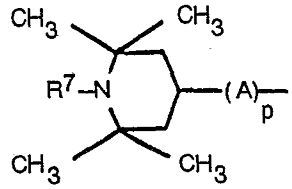

(II)

dans laquelle p est égal à ou à 1, A représente un radical alkylène en $C_1$—$C_4$, un radical —$NR^6$—($C_2$—$C_{12}$)alkylène- ou un radical —$OCH_2CH_2CH_2$— et $R^7$ représente H, O·, un alkyle en $C_1$—$C_{12}$, un allyle, un benzyle ou un radical —$CH_2$—$CH(R^8)$—OH dans lequel $R^8$ représente H, $CH_3$ ou un phényle,
$R^1$ et $R^3$ représentent chacun l'hydrogène, un alkyle en $C_1$—$C_4$, un hydroxyalkyle en $C_1$ ou $C_2$, un alcoxy-alkyle en $C_2$ ou $C_3$ ou un radical pipéridinique de formule II dans lequel p est égal à zéro et $R^7$ représente l'hydrogène, un alkyle en $C_1$—$C_4$ ou un hydroxyéthyle,
$R^2$ représente l'hydrogène, un alkyle en $C_1$—$C_4$ ou un allyle,
$R^4$ représente, lorsque m est égal à 1, l'hydrogène, un alkyle en $C_1$—$C_4$, un hydroxyéthyle, un benzyle ou un radical pipéridinique de formule II et, lorsque m est égal à 2, un radical alkylène en $C_2$—$C_6$, un radical —phénylène—$CH_2$—phénylène— ou un radical —$CH_2CH_2$—NY—$(CH_2CH_2$—$NY)_q$—$CH_2CH_2$— dans lequel q est égal à zéro ou à 1 et Y représente un radical triazinyle de formule III

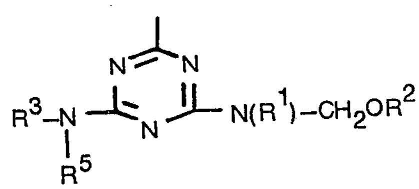

(III)

2. Procédé pour stabiliser des résines pour vernis à base de polyuréthannes, de résines de mélamine ou de résines polyesters, alkydes ou acryliques durcissables par des produits de condensation mélamine-formaldéhyde ou par des poly-isocyanates, par addition d'un dérivé polyalkyl-pipéridinique d'une s-triazine, procédé caractérisé en ce qu'on utilise un composé selon la revendication 1.

3. Résine pour peintures et vernis stabilisée contre la dégradation que peut occasionner la lumière, à base de polyuréthannes, de résines de mélamine ou de résines polyesters, alkydes ou acryliques durcissables par des produits de condensation mélamine-formaldéhyde ou des poly-isocyanates, résine caractérisée en ce qu'elle conitent, comme stabilisant, de 0,01 à 5% en poids d'au moins un composé selon la revendication 1.